# EUROPEAN PATENT APPLICATION

(11) **EP 4 579 489 A1**
(43) Date of publication of application: **02.07.2025**
(21) Application number: 24222956.5
(22) Date of filing: 23.12.2024
(51) Int. Cl.: G06F 16/95

(54) **QUERY INTENT SPECIFICITY**

(30) Priority: 27.12.2023 US 202318397767
(71) Applicant: eBay Inc., San Jose, CA 95125 (US)
(72) Inventor: TUNKELANG, Daniel, SAN JOSE (US); MANDAL, Aritra, SAN JOSE (US); WU, Zhe, SAN JOSE (US)
(74) Representative: Müller-Boré & Partner Patentanwälte PartG mbB

(57) **Abstract**

The technology described herein relates to systems, methods, and computer storage media, among other things, for providing search query intent specificity. Embodiments may include identifying a search query performed using a search engine and generating a query vector for the search query by aggregating search result embeddings (e.g., item listing vectors) of search results from the search query. Further, in some embodiments, similarities (e.g., cosine similarities) between the query vector and the item listing vectors can be determined. As such, an intent specificity of the search query can be determined. Further, in some embodiments, the intent specificity can be used to train an intent specificity machine learning model for generating intent specificity scores for other search queries. Based on the intent specificity scores determined using the one or more trained intent specificity machine learning models, determinations can be made with respect to precision and recall, etc.

## Description

### BACKGROUND

E-commerce search software provides users with search results based on search queries and search criteria from the search query, and offer users a shopping experience that allows them to browse through search results. For example, an e-commerce platform can analyze and index product data and other e-commerce data for users of the e-commerce platform to find suitable options associated with the search query. These types of software can provide various product recommendations.

### SUMMARY

At a high level, aspects described herein relate to systems, methods, and computer storage media for, among other things, providing search query intent specificity. In embodiments, one or more queries (e.g., a textual search query, an audio search query, etc.) can be identified. As an example, the search queries may correspond to one or more items, which may be included within an item corpus comprising a plurality of item listings. To illustrate, the item corpus may include images of items offered by sellers on an e-commerce platform, such as parts for vehicles or accessories for vehicles, clothing items, toys, ornaments, etc. As another illustration, in addition to images, the item listings may also include a textual description of the item.

Based on identifying one or more queries, a query vector may be generated for a first query by aggregating item listing vectors of search results (e.g., by taking averages of the item listing vectors) from the first query. Based on generating the query vector, similarities between the query vector and the item listing vectors can be determined (e.g., cosine similarities, an Euclidean distance, a Manhattan distance, a Minkowski distance, a cosine similarity, a Jaccard similarity, a Hamming distance, a correlation coefficient, another type of distance measurement, or one or more combinations thereof). Based on determining the similarities between the query vector and the item listing vectors, an intent specificity of the search query can be determined (e.g., by taking an average of two or more of the similarities).

In some embodiments, query vectors may be generated by aggregating search result embeddings (e.g., by determining a mean for each associated value of the search result embeddings). In some embodiments, the query vector (or an item listing vector, search result embedding, etc.) can be generated via one or more of a word2vec embedding model, a doc2vec embedding model, an image embedding model (e.g., a convolutional neural network), a generative adversarial network, a recurrent neural network, a transformer, an autoencoder, a contrastive language-image pre-training model, a Siamese neural network, another type of model, or one or more combinations thereof. As another example, the similarities between the query vector and the item listing vectors can be determined based on item listing vectors having a particular distance from the query vector, wherein the distances between the search result embeddings and query vector may be measured via one or more of an Euclidean distance, a Manhattan distance, a Minkowski distance, a cosine similarity, a Jaccard similarity, a Hamming distance, a correlation coefficient, another type of distance measurement, or one or more combinations thereof.

Further, in additional embodiments, an intent specificity machine learning model can be trained using the intent specificity to generate intent specificity scores for other search queries. For example, the intent specificity machine learning model can be trained using a distribution of intent specificities generated using search results from one or more queries associated with a higher number of user interactions compared to the number of user interactions with search results for the other search queries. In some embodiments, the intent specificity machine learning model can be trained using a plurality of intent specificities generated using search results for a plurality of queries.

In some embodiments, the intent specificity machine learning model may include Bidirectional Encoder Representations from Transformers (BERT), a large language model, a generative-pre-trained transformer, a text-to-text transfer transformer, a conditional transformer language model, a generative adversarial network, a vector quantized variational autoencoder, a contrastive language-image pre-training model, other types of machine learning models, or one or more combinations thereof. As one non-limiting example, one or more BERTs can be applied to generate intent specificity scores for search queries of a particular query type (e.g., a tail query type). For instance, the intent specificity machine learning model may be trained using intent specificities determined for other query types (e.g., head query types, torso query types, etc.) to generate intent specificity scores for search queries of another query type (e.g., tail query types).

Based on providing, using the trained intent specificity machine learning model, an intent specificity score for a search query (e.g., of a particular query type), one or more search results can be provided (e.g., via user interface). In some embodiments, the one or more search results can be provided based on the intent specificity score (e.g., for the search query of this particular query type) being above or below an intent specificity score threshold. As an example, based on determining that the intent specificity score for the search query of this particular query type is above the intent specificity score threshold, the one or more search results can be provided based on an indication that the search query of this particular query type is precise (rather than providing the results based on an indication for recall).

As another example, based on determining that the intent specificity score is above the intent specificity score threshold, the one or more search results can be provided based on an indication that the search query is a query-dependent factor. In yet another example, based on determining that the intent specificity score for the search query is below the intent specificity score threshold, the one or more search results can be provided based on an indication that the search query is a query-independent factor.

In these ways, the technology described herein can utilize the intent specificities and the intent specificity scores generated using the trained intent specificity machine learning model for query suggestions (e.g., for auto-competing queries, for suggesting a related search) associated with higher specificity, generate refinement options and search results from refinement options with higher specificity, sophisticated management of query-dependent and query-independent factors, improved retrieval and ranking operations for null and low recoveries, etc.

This summary is intended to introduce a selection of concepts in a simplified form that is further described in the Detailed Description section of this disclosure. The Summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 includes an example operating environment suitable for providing an intent specificity and an intent specificity score, in accordance with an embodiment described herein;
FIG. 2 is a block diagram for search vector generation, in accordance with an embodiment described herein;
FIG. 3 is a block diagram for providing an intent specificity score using a trained intent specificity machine learning model, in accordance with an embodiment described herein;
FIG. 4 illustrates an example flow diagram for generating a query vector and intent specificity that can be used for training the intent specificity machine learning model, in accordance with an embodiment described herein;
FIG. 5 illustrates an example flow diagram for generating an intent specificity score using the trained intent specificity machine learning model, in accordance with an embodiment described herein;
FIG. 6 illustrates an example flowchart for providing an intent specificity and an intent specificity score using a trained intent specificity machine learning model, in accordance with an embodiment described herein; and
FIG. 7 is an example computing device suitable for implementing the described technology, in accordance with an embodiment described herein.

### DETAILED DESCRIPTION

General query searching refers to the process of using a search engine to find information over a network, such as the Internet (e.g., by entering text queries). For these general search queries, users can input a series of words or phrases into a search system, and the search engine returns a list of items, including web pages, documents, images, or other types of files that are considered relevant to the query.

Some search queries can involve head queries, torso queries, or tail queries. For example, head queries and torso queries typically generate search results that have a higher volume of user clicks or other types of user interactions of interest compared to the search results generated for the tail queries. As another example, head queries typically generate search results that have a higher volume of user clicks or other types of user interactions of interest compared to the search results generated for the torso queries. In yet another example, tail queries typically have a higher volume of fewer queries with longer words or multi-word phrases compared to a head queries and torso queries. Stated differently, a head query is typically a query that is frequently searched and receives a majority of the engagement from users, a torso query is typically one with a fair amount of search volume and engagement but not as much as a head query, and a tail query does not often get submitted and does not receive many clicks or engagements. In general, tail queries may be individual and longer than head queries.

Frequent queries, which can be referred to as head queries, provide more click-through data compared to tail queries having little historical data to rely on, which makes tail queries more difficult to analyze using ranking algorithms. One of the challenges of search engines is how to handle tail queries, or queries that occur very infrequently. For example, the tail of query frequency distribution can include noisy and sparse logs of those tail queries. Although tail queries can be individually uncommon, they can also make up a large portion of queries collectively. As another example, these large portions of tail queries can exhibit large variability, which can also make it difficult to analyze search results (e.g., by using ranking algorithms).

When it comes to search querying, a user's search intent can be specific, such that if the searcher is looking for a specific product, anything other than an exact match may be useless. At the other end of the user intent spectrum, a searcher with a more open-ended or less specific intent may want to view other desirable but less relevant search results when providing the search query. Without properly considering the specificity of a search intent, search engine management of precision-recall tradeoffs in retrieval and management of the tradeoff between query-dependent and query-independent factors in ranking can become less precise and inefficient.

To illustrate, many conventional search engine systems inaccurately or inefficiently consider the specificity of a search intent. In addition, these systems also inaccurately or inefficiently consider user intent with respect to tail queries, for example, due to the query frequency distribution including noisy and sparse logs of those tail queries, the lack of information related to the tail queries, or due to the tail queries exhibiting large variability. In this way, these systems end up providing search results that are not in accordance with a true intent of the user providing a particular search query type, such as tail queries. For instance, conventional systems often identify and generate search results based on the lack of information related to the tail queries, and therefore, fail to adapt to scenarios of generating specific search results or scenarios in which the user has an open-ended or less specific intent. In these ways, these conventional systems can thereby fail to generate high quality, targeted results that are specific to a particular user's preferences.

Furthermore, enhanced and more targeted search techniques are integral to the technical function of e-commerce search systems due to the volume of available online content or available stored content and the diversity of this content. For example, the Internet hosts billions of web pages, images, videos, social media data, advertising data, and other forms of data. Without sophisticated search techniques and ranking algorithms that are fine tuned for tail queries and other queries having less search result information on what the users are doing with these particular search results, it would be arduous to find and process the relevant information in this vast sea of content. In addition, prior systems have not been configured with a comprehensive logic and infrastructure to effectively generate and provide reliable intent specificity for tail queries and other queries having less search result information on what the users are doing with these particular search results. Helping users find products through queries can be challenging, which can require sophisticated algorithms for determining what the user intends when providing a search query.

It is desirable for e-commerce methods and systems to accurately identify accurate intent specificities (e.g., for tail queries and other queries having less search result information on what the users are doing with these particular search results). It is also desirable to enhance computer network component communications between or among the e-commerce system components, and between the e-commerce system and the client devices of the users who are utilizing the e-commerce platform to provide search queries in which the e-commerce system can identify intent specificity for. The technology described herein achieves these goals and provides various improvements to the problems specific to the prior systems discussed above.

For example, the technology discussed herein can generate search results based on intent specificity determinations made for the search queries provided, such that the search results are more tailored to a particular user's preferences or a particular user's intent. Further, the technology discussed herein can also reduce excessive computer input I/O operations (e.g., excess physical read/write head movements on non-volatile disk) by reducing the amount of time each operating system or other component processes a user request based on the technology providing intent specificities for the search queries to generate search results that are more tailored to a particular user's preference or intent, rather than continuously receiving user-provided search queries and filtering suggestions to arrive at the intended item listing. Furthermore, the technology described herein can also reduce the physical wear on storage components, since the user device does not have to reach out to the storage device to perform a read or write operation for continuous additional queries, added search query term descriptions, or the application of various filters. (Read/write heads, for example, are very mechanical in nature and subject to information access errors because of the precise movements they must make when locating particular data. Such information access errors are more likely to occur when there is excessive computer I/O. Moreover, each repetitive input (e.g., reentering a search query, adding search query term descriptions, or applying various filters) also requires the data to be saved to memory, thereby unnecessarily consuming storage space.)

In embodiments of the present disclosure, a computer-implemented method can include identifying a search query provided at a search engine. In some embodiments, the search query may be of a first query type that is different from a second query type, the first query type corresponding to a higher number of user interactions compared to the second query type. For example, the first query type of a plurality of historical queries may correspond to a higher number of user interactions with search results provided for those historical queries of the first type. That is, the first query may be a search query that was previously provided by a user. In some embodiments, the first query type is a head query type and the second query type is a tail query type. In other embodiments, the first query type is a torso query type and the second query type is a tail query type.

The identified search query provided at the search engine may correspond to a number of user interactions with search results of the search query that are above a threshold. For example, in some embodiments, the second query type is a search query type having a lower volume of user interactions with search results for those queries of the second query type compared to the search queries for the first query type. As another example, in some embodiments, the second query type corresponds to a number of user interactions with search results for those queries of the second query type being below the threshold. In some embodiments, the second query type is a tail query type. In some embodiments, the second query type has a higher volume of fewer queries with longer words or multi-word phrases compared to a head query type or a torso query type. In some embodiments, the first query type may be head query type or a torso query type.

The term "user" may correspond to a human, a particular entity, a robot, another particular machine, etc.

The term "user interaction" may include, for example, items or services associated with an item listing and corresponding to previous purchases, items or services corresponding to previous clicks (e.g., a selection of an item listing or a selection of an image within an item listing), ratings provided for particular items or services, items or services indicated as "liked," items or services indicated as "favorite," other indications or notes provided by the user with respect to an item or service, scrolling within an item listing for a particular period of time, hovering over an image of an item within an item listing for a particular period of time, pauses between viewing item listings for a particular period of time, prior search query modifications and applied filters, other types of user interactions, or one or more combinations thereof.

The term "item" referred to herein may mean something that can be identified in response to a search query (e.g., a search query within an e-commerce platform). For example, an item can be a good, a software product, a tangible item, an intangible item (e.g., computer software, an electronic document, a video of a movie, an audio of a song, an electronic photograph, etc.), another type of item, or one or more combinations thereof.

The term "item listing" referred to herein may include a title, one or more images, one or more videos, metadata, an item description, other item listing data, or one or more combinations thereof.

The computer-implemented method can also include generating a query vector for the first query (e.g., based on historical user interactions with search results from the first query and based on various determinations associated with the search results specific to that first query). For example, intent specificities can be determined for a set of queries including the first query. The intent specificity for the first query can be determined based on generating the query vector for the first query by aggregating item listing vectors of the search results for that first query, determining similarities between the item listing vectors and the query vector (e.g., cosine similarities, particular distances between the query vector and the item listing vectors, etc.), and by determining the mean of the similarities.

Further, an intent specificity machine learning model can be trained on the intent specificities (e.g., based on query vectors generated for head queries, torso queries, or one or more combinations thereof) to generate intent specificity scores for search queries (e.g., of queries having lower interaction histories with search results of those queries). In some embodiments, the intent specificity machine learning model may include Bidirectional Encoder Representations from Transformers (BERT), a large language model, a generative-pre-trained transformer, a text-to-text transfer transformer, a conditional transformer language model, a generative adversarial network, a vector quantized variational autoencoder, a contrastive language-image pre-training model, other types of machine learning models, or one or more combinations thereof.

The computer-implemented method can also include providing, using the trained intent specificity machine learning model, an intent specificity score (e.g., for a second query of the second query type). In some embodiments, based on determining that the intent specificity score for the second query is above an intent specificity score threshold, the second query can be used as a query-dependent factor for generating search results for the second query. In some embodiments, based on determining that the intent specificity score for the second query is below an intent specificity score threshold, the second query can be used as a query-independent factor (e.g., for generating search results for the second query, for suggesting an auto-completion for the second query, for auto-completing the second query, for suggesting a related search, etc.). In some embodiments, the threshold can vary depending on one or more of an intent specificity (associated with the first query type) or the intent specificity score (associated with the second query type) when managing the tradeoff between precision and recall for the second query.

While reference may be made to an online marketplace utilizing the disclosed technology to identify and retrieve items and item listings for generating and regenerating three-dimensional environments (or other dimensional environments), it will be understood that the technology discussed herein may be used in a more general context of an online search engine (e.g., that identifies and retrieves web results, that provides answers in response to a search query, that provides related searches, that provides or identifies advertisements, that provides other types of results, or one or more combinations thereof).

Having provided some example scenarios, a technology suitable for performing these examples is described in more detail with reference to the drawings. It will be understood that additional systems and methods for providing the improved search results and navigation can be derived from the following description of the technology.

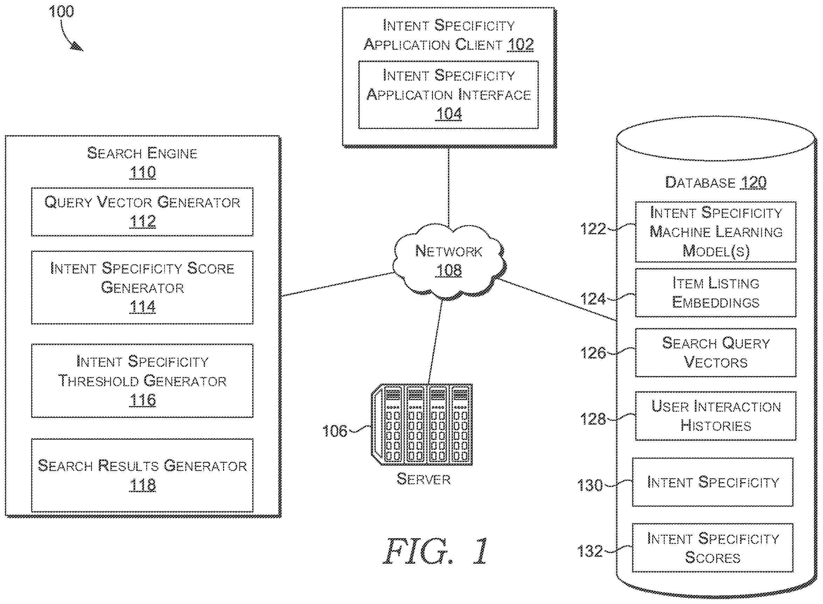

Turning now to FIG. 1, FIG. 1 illustrates example operating environment 100 in which implementations of the present disclosure may be employed. In particular, FIG. 1 illustrates a high-level architecture of operating environment 100 having components in accordance with implementations of the present disclosure. The components and architecture of FIG. 1 are intended as examples, as noted toward the end of the Detailed Description.

Example operating environment 100 includes intent specificity application client 102 (e.g., a client device, a user device) including intent specificity application interface 104; a server 106; a network 108; a search engine 110 comprising query vector generator 112, intent specificity score generator 114, intent specificity threshold generator 116, and search results generator 118; and a database 120 comprising intent specificity machine learning model(s) 122, item listing embeddings 124, search query vectors 126, user interaction histories 128, intent specificities 130, and intent specificity scores 132.

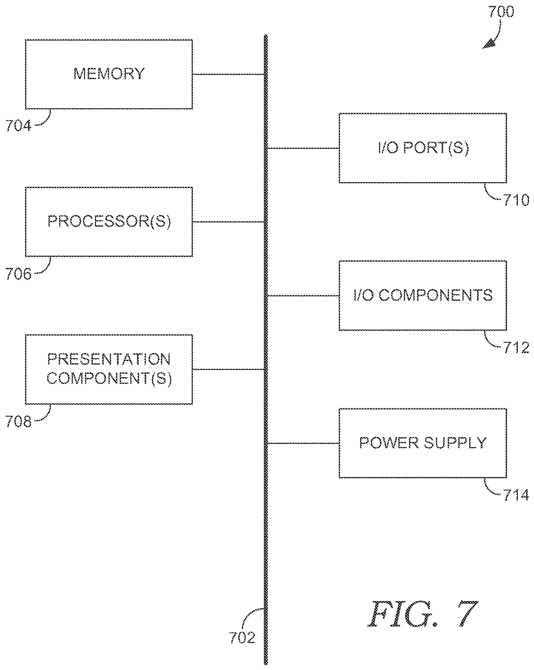

The intent specificity application client 102 may be a device that has the capability of using a wireless communications network, and may also be referred to as a "computing device," "mobile device," "client device," "user equipment," "wireless communication device," or "UE." A user device, in some embodiments, may take on a variety of forms, such as a PC, a laptop computer, a tablet, a mobile phone, a PDA, a server, or any other device that is capable of communicating with other devices (e.g., by transmitting or receiving a signal) using a wireless communication. Broadly, the intent specificity application client 102 can include computer-readable media storing computer-executable instructions executed by at least one computer processor. One example of the intent specificity application client 102 includes computing device 700 described herein with reference to FIG. 7.

As illustrated in example environment 100, the intent specificity application client 102 may be capable of communicating with the search engine 110, the server 106, or the database 120 over the network 108. Other embodiments of example environment 100 may include additional intent specificity application clients. The intent specificity application client 102 may be operated by a user, such as one or more of a person, machine, robot, other user device operator, or one or more combinations thereof.

The intent specificity application client 102 can be associated with seller interfaces and buyer interfaces. The intent specificity application client 102 can also cause display of image data, text data, extended reality data, other types of data, or one or more combinations thereof, based on the server 106 operations and the search engine 110 operations (e.g., operations associated with the query vector generator 112, intent specificity score generator 114, intent specificity threshold generator 116, search results generator 118, etc., or one or more combinations thereof).

In embodiments, the network 108 may be a local area network (LAN), a wide area network (WAN), a mesh network, a hybrid network, or other wired or wireless networks. Network 108 may be the Internet or some other public or private network. The intent specificity application client 102 can be connected to network 108 via a network interface, such as by wired or wireless communication. Other embodiments of example environment 100 may include additional servers that are connected to the network 108.

Generally, server 106 is a computing device that implements functional aspects of operating environment 100. In embodiments, server 106 represents a backend or server-side device. In some embodiments, the server 106 can be an edge server which receives user device requests (e.g., a search query, etc.) and coordinates fulfillment of those requests (e.g., sometimes through other servers).

In addition, the server 106 can comprise computing devices, such as computing device 700 of FIG. 7. Though the server 106 is displayed logically as a single server, the server 106 can be, in other embodiments, a distributed computing environment encompassing multiple computing devices located at the same physical geographical location or at different physical geographical locations. In some embodiments, the server 106 can connect to the database 120 or, in other embodiments, the server 106 can be in communication with a plurality of servers that each share the database 120 or that each have their own database, for example.

In embodiments, intent specificity application client 102 is a client-side or front-end device and the server 106 is a backend or server-side computing device. The server 106 and the intent specificity application client 102 may, in some embodiments, implement functional aspects of example operating environment 100, such as one or more functions of search engine 110. It will be understood that some implementations of the technology will comprise either a client-side or front-end computing device, a backend or server-side computing device, or both executing any combination of functions from search engine 110, among other functions or combinations of functions.

The search engine 110 can access the database 120 to execute tasks associated with the intent specificity machine learning model(s) 122 (e.g., for operations using intent specificity machine learning model(s) 122 via the intent specificity score generator 114). For example, a user - via the intent specificity application client 102 (e.g., a prompt interface, a search bar, etc.) - can communicate a request (e.g., a tail search query or another type of search query having limited associated historical user interactions) to the search engine 110 to process the request. Based on communicating the request, the search engine 110 can execute operations (e.g. training, generating, deploying and integrating, mapping, rotating, and controlling operations) with components of the database 120 (e.g., the intent specificity machine learning model(s) 122) - to ensure processing the request. The search engine 110 can leverage the intent specificity machine learning model(s) 122 to create, generate, or produce content, data or outputs. The search engine 110 can use the intent specificity machine learning model(s) 122 to perform various tasks across different domains to provide improvement in automation, efficiency, and search result generation.

Generally, the search engine 110 and the intent specificity application client 102 can operate in a server-client relationship to provide search results and various suggestions for the intent specificity application client 102 based on operations of the query vector generator 112, intent specificity score generator 114, intent specificity threshold generator 116, search results generator 118, other operations of the search engine 110, or one or more combinations thereof. For example, a user can provide a search query (e.g., a tail query) from the intent specificity application client 102 to execute search engine 110 operations. Based on the search query, the search engine 110 can determine an intent specificity score for the search query using the intent specificity machine learning model(s) 122. For example, the search query can be processed such that interface data (e.g., image data, text data, etc.) is generated and communicated via the intent specificity application interface 104.

In embodiments, the query vector generator 112 can generate one or more query vectors for one or more queries of a particular type (e.g., for a head query, a torso query), or for one or more portions of a query of the particular type, based on utilizing one or more of the item listing embeddings 124, the user interaction histories 128, other data (e.g., other data stored within the database 120), or one or more combinations thereof. Stated differently, the query vector generator 112 can generate one or more query vectors for historical search queries of a particular type, such that the historical search queries have a threshold number of prior user interaction histories for search results for each historical search query.

In some embodiments, the query vector generator 112 can generate a query vector based on user interaction histories 128 with the search results for that search query. By way of example, the query vector can be generated using search result embeddings (e.g., item listing search result embeddings 124, web page search result embeddings, video search result embeddings, news article search result embeddings, social media search result embeddings, etc.). In some embodiments, the search engine 110 can generate one or more intent specificities (e.g., for a head or torso query) using search result embeddings having a particular distance measurement from the query vector. In embodiments, the query vector can be generated by aggregating the search result item listing vectors of search results for the query, the search result item listing vectors being generated based on data within the item listing (e.g., images of the item of the item listing, textual description of the item of the item listing, etc.). The search result item listing vectors can also be generated based on historical user interactions with each corresponding item listing.

In some embodiments, the search engine 110 can determine an intent specificity, to store within the intent specificities 130 for queries (e.g., a head query) based on determining similarities between the query vector and search results. For example, one or more mean of cosine similarities between the query vector for the first query and its corresponding search result item listing vectors can be determined. As another non-limiting example, intent specificities (e.g., for head queries, torso queries, other types of queries having a particular number or amount of historical user interaction data for search results, or one or more combinations thereof) can be determined based on a particular distance between a query vector and its search result item listing vectors. For instance, the particular distance may be measured via one or more of an Euclidean distance, a Manhattan distance, a Minkowski distance, a cosine similarity, a Jaccard similarity, a Hamming distance, a correlation coefficient, another type of distance measurement, or one or more combinations thereof.

In some embodiments, the query vector generator 112 can aggregate or concatenate search result item listing embeddings for a query from the item listing embeddings 124 to generate a query vector (e.g., using one or more of a portion of those search result item listing embeddings). In embodiments, an intent specificity for the query can be determined based on determining cosine similarities between the query vector generated from the aggregation or concatenation and at least a portion of the search result vectors. For example, the intent specificity can be determined using each of the search result vectors for that query. As another example, the intent specificity can be determined using a first portion of the search result vectors (e.g., within a first cosine similarity range) and a second portion of search result vectors (e.g., within a second cosine similarity range). In some embodiments, search result item listing vectors can be generated or used for generating the search query vector based on historical user interactions associated with a particular item listing and tags within that item listing associated with the search query (e.g., a head query, torso query, another type of query having a particular number or amount of historical user interaction data for search results).

In some embodiments, the query vector generator 112 can generate query vectors (e.g., an aggregation of particular item listing vectors) and search result vectors (e.g., item listing vectors), via one or more of a word2vec embedding model, a doc2vec embedding model, an image embedding model (e.g., a convolutional neural network), a generative adversarial network, a recurrent neural network, a transformer, an autoencoder, a contrastive language-image pre-training model, a Siamese neural network, another type of model, or one or more combinations thereof. For example, an image embedding model (e.g., a convolutional neural network) can be used to generate an item listing vector based on processing one or more images of the item listing for a particular item. As another example, an item listing vector can be generated by applying both an image embedding model and a language model (e.g., a large language model) to the item listing (e.g., including both images and a textual description). In yet another example, an item listing vector can be generated by applying a multi-modal model capable of processing both images and text (e.g., a contrastive language-image pre-training model).

In some embodiments, the search engine 110 can generating a distribution of intent specificities for search results from a first query of a first query type (e.g., head queries), the distribution of intent specificities being based on the user interactions with the search results. The search engine 110 may also generate a distribution of intent specificities for search results from a plurality of queries of a first query type based on the user interactions with the search results, a distribution of intent specificities for search results from a second query of a second query type (e.g., torso queries) based on the user interactions with the search results, a distribution of intent specificities for search results from a plurality of queries of the second query type based on the user interactions with the search results, or one or more combinations thereof, wherein the first query type is different from a second query type, and wherein these two query types each have a particular number or amount of historical user interaction data for search results (e.g., wherein these two query types each have a particular number or amount of historical user interaction data for search results that is greater than that of a tail query type).

In some embodiments, the distribution of intent specificities can be generated based on item listing embeddings 124 and user interaction histories 128. By way of example, the distribution of intent specificities for search results of a particular query can refer to the spread or arrangement of scores assigned to documents or item listing returned by a search engine (e.g., search engine 110) in response to received search queries. For example, the distribution of intent specificities can be generated by using a ranking of the search results that was previously used when presenting the search results via a display. In some embodiments, the distribution of intent specificities can be generated based on one or more of previous clicks, cost-per-click data, click-through rate, impression shares (e.g., based on potential impressions), return on ad spend, ratings provided, views for a particular period of time, other types of historical user interactions, or one or more combinations thereof. In some embodiments, the distribution of intent specificities can be generated based on the query vector generator 112 extracting particular textual data, image data, metadata, item listing embeddings, etc., from the item listings of the search results for a particular historical search query.

In embodiments, the user interaction histories 128 can include user interaction data of a particular user associated with a historical search query (e.g., for a head or torso query), user interaction data of other particular users associated with a historical search query, other types of historical user interactions, or one or more combinations thereof. In some embodiments, one or more models (e.g., a generative adversarial network, a convolutional neural network, a recurrent neural network, a transformer, an autoencoder, a contrastive language-image pre-training model, a Siamese neural network, another type of machine learning model, or one or more combinations thereof) can be used for generating item listing embeddings 124 based on the user interaction histories 128 and based on historical search queries (e.g., head queries and torso queries).

The database 120 (storing intent specificity machine learning model(s) 122, item listing embeddings 124, search query vectors 126, user interaction histories 128, intent specificities 130, and intent specificity scores 132) can store computer instructions (e.g., software program instructions, routines, or services), or models (e.g., intent specificity machine learning model(s) 122) used in the embodiments described herein. For instance, database 120 may store computer instructions for implementing functional aspects of search engine 110. Although depicted as a single database component, database 120 may be embodied as one or more databases (e.g., a distributed computing environment encompassing multiple computing devices) or may be in the cloud. In other embodiments, the intent specificity machine learning model(s) 122 may be stored in a separate database. In embodiments, the search engine 110 can be configured to run any number of queries on the database 120.

In embodiments, the item listing embeddings 124, search query vectors 126, or intent specificities 130 can be generated and stored based on the user interaction histories 128 having particular user interaction histories stored as data structures (e.g., log records or statistics in one or more tables, such as a relational database table). In some embodiments, the data structures for the user interaction histories 128 can be generated using one or more cookies at the search engine 110 to organize user interaction histories by user, to organize user interaction histories by search query type (e.g., head queries), to organize search query type based on key terms or item listing vector, to organize search query type based on user interaction volume, etc., or one or more combinations thereof. In some embodiments, the data structures for the user interaction histories 128 can be generated using particular user interactions with search results from historical queries from a user device fingerprint or IP address of a user device of the user providing the historical query. For example, the data structures for the user interaction histories 128 may be generated using particular user interaction histories from user devices within a particular geographical area, user interaction histories from user devices of a particular network, user interactions during a particular time period, etc., or one or more combinations thereof.

In some embodiments, the search query vectors 126 can be generated based on the item listing embeddings 124 or user interaction histories 128 being within a particular position (e.g., a row or column of a table) of a data structure and based on an increment (e.g., a quantity of clicks, purchases, "likes," shares via a particular digital platform, a number of views of an item listing). In some embodiments, the search query vectors 126 can be generated based on the item listing embeddings 124 being generated from a particular user rating (e.g., above 4.6 stars and over 30 ratings). In some embodiments, the item listing embeddings 124 may be generated using one or more machine learning models (e.g., a convolutional neural network, recurrent neural network, a deep learning model, a gradient boosted decision tree, a random forest decision tree, another type of decision tree, a generative adversarial neural network, a regression model, another type of machine learning model, or one or more combinations thereof). In some embodiments, the item listing embeddings 124 may be generated by concatenating a textual embedding and an image embedding for images and a textual description of the item listing.

In some embodiments, the search engine 110 may perform tasks simultaneously. By way of example, the query vector generator 112 may simultaneously generate query vectors for a plurality of head queries and query vectors for a plurality of torso queries for storage at the search query vectors 126. As another example, the search engine 110 may simultaneously generate intent specificities 130 (e.g., intent specificities indicating an item or item listing relevance in the context of the current query without consideration of user-desirability) for head queries and for torso queries, or simultaneously generate intent specificities 130 for a plurality of head queries. In some embodiments, the search engine 110 may simultaneously generate a distribution of intent specificities, based on item listing embeddings 124 and user interaction histories 128, for a head query and a torso query. In some embodiments, the distribution of intent specificities can be generated based on the item listing embeddings 124 or user interaction histories 128 being within a particular position (e.g., a row or column of a table) of a data structure and based on an increment (e.g., a quantity of clicks, purchases, "likes," shares via a particular digital platform, a number of views of an item listing).

In some embodiments, a particular weighting can be applied to particular search results (e.g., for a head query or torso query) for generating the search query vectors 126 via the query vector generator 112. For example, a particular item listing from a search result may be weighted more highly based on particular user interaction histories 128 (e.g., a particular number of clicks, a particular number of purchases, a particular number of views, etc.). To illustrate, an item listing for a first search result, having a combination of user interaction histories (e.g., both purchases and views) that involve more user interactions than another item listing for a second search result, could be weighted higher than the second search result. In some embodiments, when training the intent specificity machine learning model(s) 122 based on the generated search query vectors 126 for head queries and torso queries, in some embodiments, the search query vectors 126 associated with a higher number of user interaction histories or the search query vectors 126 associated with a higher intent specificity can be weighted more highly.

In example embodiments, the database 120 or components thereof can include a search index that can be used by the search engine 110, such as an inverted index, but other index forms are also possible. By way of example, the database 120 or components thereof may include one or more tables for the search query vectors 126 within the search index. In another example, a particular position of the item listing embedding 124 can be based on particular colors of the item, dimensions or sizes of the item, intent specificities 130, other identifiers associated with the item, or one or more combinations thereof. In other embodiments, components of the database 120 may be discrete components separate from search engine 110, or may be incorporated or integrated into the search engine 110.

In embodiments, the intent specificity machine learning model(s) 122 may include a natural language understanding model, a large language model, a text-to-speech engine, an automatic speech recognition engine (e.g., a recurrent neural network, another transformer model, or another type of machine learning technique that can perform automatic speech recognition), Bidirectional Encoder Representations from Transformers (BERT), embeddings from language models (ELMo), bidirectional long short-term memory network (BiLSTM), etc., or one or more combinations thereof. In some embodiments, the intent specificity machine learning model(s) 122 may include a first larger model and a second smaller model, the larger model having a higher number of transformer layers than the smaller model. In some embodiments, the intent specificity machine learning model(s) 122 may include a first model having a larger hidden size of an individual transformer layer than that of a second model.

In some embodiments, the intent specificity machine learning model(s) 122 may be trained using offline head query vector aggregations with their associated search results, offline torso query vector aggregations with their associated search results, offline browse node aggregations with their associated search results, or one or more combinations thereof. Each of the vector aggregations can be generated (e.g., by query vector generator 112) based on user interaction histories 128 associated with the associated search results. In some embodiments, the intent specificity machine learning model(s) 122 may be trained based on query vectors being generated using one or more bag-of-words models. For instance, a head query type vector can be generated using a mean of clicked or purchased item listings from search results for the head query and BERT or another transformer. As another example, a torso query type vector can be generated using a mean of clicked or purchased item listings from search results for the torso query and BERT or another transformer.

In some embodiments, the intent specificity machine learning model(s) 122 may be trained based on determining a mean of cosines between a head query and item listing embeddings of search results for that head query. Additionally or alternatively, in some embodiments, the intent specificity machine learning model(s) 122 may be trained based on determining a mean of cosines between a torso query and item listing embeddings of search results for that torso query. In some embodiments, the head query is a more specific query than the torso query, such that the mean of cosines between the head query and those associated item listing embeddings have more tightly clustered item listing embeddings close to the mean than the associated item listing embeddings for the cosine mean of the torso query. In some embodiments, item listing embeddings generated for the head and torso queries are generated without considering a category taxonomy of the corresponding item listings.

The intent specificity machine learning model(s) 122 may be trained to generate intent specificity scores 132, via the intent specificity score generator 114, for search queries of a different query type. For example, intent specificity machine learning model(s) 122 may be trained to generate intent specificity scores 132 for a type of search query having a lower volume of associated historical user interactions with search results compared to the query type(s) in which the intent specificity machine learning model(s) 122 is trained. For instance, the intent specificity machine learning model(s) 122 may be trained, using search query vectors 126 generated for head queries and torso queries, to generate intent specificity scores 132 for tail search queries. In some embodiments, the intent specificity machine learning model(s) 122 may be trained, using offline browse node aggregations with their associated search results for head browse nodes and torso browse nodes, to generate intent specificity scores 132 for tail browse nodes (e.g., browse nodes having a lower volume of associated historical user interactions with search results compared to the other browse nodes from which the intent specificity machine learning model(s) 122 is trained).

In some embodiments, the intent specificity machine learning model(s) 122 may include BERT, and the intent specificity scores 132 for tail search queries can be generated using a single output layer and a Mean Squared Error (MSE) loss function of BERT. In this way, the intent specificity score generator 114 can determine patterns mined from the head and torso queries to generate the intent specificity scores 132 for the tail search queries. In some embodiments, the intent specificity machine learning model(s) 122 may include BERT, and the intent specificity scores 132 for browse nodes, having a lower volume of associated historical user interactions, can be generated using a single output layer and a Mean Squared Error (MSE) loss function of BERT. In this way, the intent specificity score generator 114 can determine patterns mined from the browse nodes having a higher volume of associated historical user interactions to generate the intent specificity scores 132 for the browse nodes having the lower volume of associated historical user interactions.

In some embodiments, the intent specificity machine learning model(s) 122 can be retrained based on user provided feedback (e.g., based on modifying a query vector using the feedback, based on additional user interactions being stored at the user interaction histories 128, based on updating an intent specificity score threshold via the intent specificity threshold generator 116 using the feedback). For example, in some embodiments, the query vector can be reduced or expanded based on the user feedback upon providing search results via search results generator 118 in response to receiving a tail query. As another example, the query vector can be modified using the updated user interaction histories 128 (e.g., the user making a purchase after applying a particular filter upon receiving search results from search results generator 118 in response to providing a tail query).

In yet another example, an intent specificity score threshold can be updated, via the intent specificity threshold generator 116, for a modified query vector based on the feedback provided (e.g., the user entering another search query without selection of any of the provided search results). For instance, if the updated specificity score is higher, the intent specificity score threshold may be adjusted by the intent specificity threshold generator 116 (e.g., adjusted based on a mean of the cosines between the search results of the head query). In embodiments, instead of using a single cosine threshold for each tail query provided to the intent specificity machine learning model(s) 122, the threshold can vary depending upon a percentile of the intent specificity used in training the intent specificity machine learning model(s) 122 to determine the intent specificity score. In this way, using the intent specificity threshold generator 116 to generate intent specificity score thresholds using different percentile values can further allow the search results generator 118 to determine particular tradeoff metrics at runtime for the tail search query.

The search results generator 118 can provide search results (e.g., for tail queries) based on utilizing the intent specificity score generator 114 and the intent specificity machine learning model(s) 122. In some embodiments, the search results generator 118 can provide, based on using the trained intent specificity machine learning model(s) 122, an intent specificity score 132 for a received tail query or another type of query associated with a particular volume of user interactions with previous search results for the other query type. In embodiments, the intent specificity score can be used for identifying other queries (e.g., other types of queries or other query terms) that are similar to the search query provided, managing search queries having similar mean vectors with different variances, determining the scope of relevance, incorporation into a relevance model for determining relevance and desirability tradeoffs for producing search results, application as a filter in other analytics, among other search engine functionalities.

In some embodiments, based on the intent specificity score (e.g., based on the intent specificity score being above an intent specificity score threshold determined by intent specificity threshold generator 116), particular search results for the tail query can be indicated (for retrieval of the search results using the tail query) as precise instead of being indicated for recall, and the search terms of tail query can be indicated as precise instead of being indicated for recall. In some embodiments, based on the intent specificity score (e.g., based on the intent specificity score being below an intent specificity score threshold determined by intent specificity threshold generator 116), particular search results for the tail query can be indicated (for retrieval of the search results using the tail query) for recall instead of being indicated as precise, and the search terms of tail query can be indicated for recall instead of being indicated as precise. In this way, the intent specificity score can be used for determining whether truncate retrieval based on the number of search results, determining whether truncate retrieval based on an absolute cosine value, or one or more combinations thereof. In this way, tail queries having high specificity may favor precision while tail queries having lower specificity may favor recall.

In some embodiments, based on the intent specificity score (e.g., based on the intent specificity score being above or below an intent specificity score threshold determined by intent specificity threshold generator 116), particular search results for the tail query can be ranked. By way of example, based on the intent specificity score being above the intent specificity score threshold, the search results can be ranked based on indicating the tail query as a query-dependent factor. In this way, the search results can be provided to the intent specificity application client 102 in a particular order based on the ranking and based on the tail query being indicated as a query-dependent factor. In another example, based on the intent specificity score being below the intent specificity score threshold, the search results can be ranked based on indicating the tail query as a query-independent factor. In this way, a ranking system of the search results generator 118 can learn query-specific tradeoffs between query-dependent and query-independent factors for the tail queries.

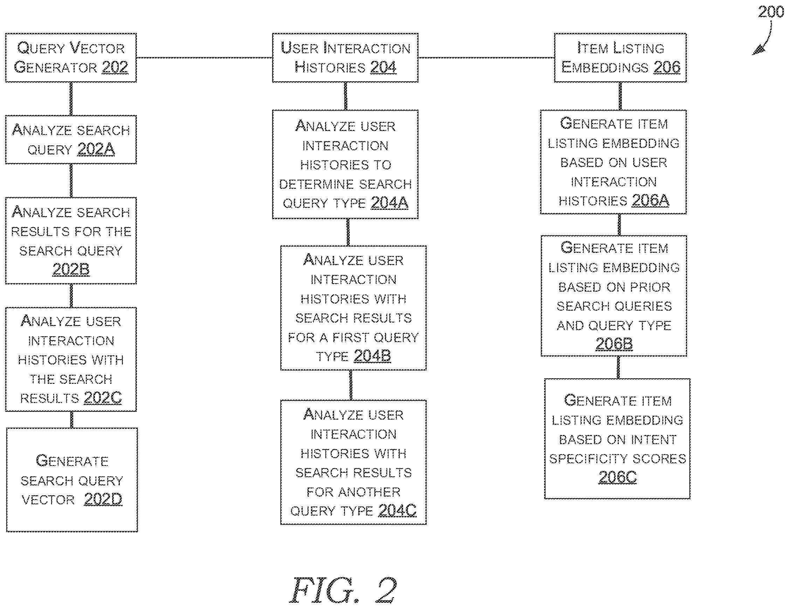

FIG. 2 depicts example block diagram 200 for search vector generation for training an intent specificity machine learning model. Example block diagram 200 includes example operations for query vector generator 202 (e.g., operations 202A, 202B, 202C, and 202D), example operations associated with user interaction histories 204 (e.g., operations 204A, 204B, and 204C), and example operations associated with item listing embeddings 206 (e.g., operations 206A, 206B, and 206C).

The query vector generator 202 can analyze search queries 202A (e.g., textual search queries, audio search queries, image search queries, etc., or one or more combinations thereof). For example, the query vector generator 202 can analyze search queries (e.g., head queries, torso queries) using one or more of keyword matching (e.g., matching keywords to documents, webpages, user interaction history database(s), item listing indexes, user profile data, etc.), natural language processing (e.g., for search query semantic understanding, by parsing the query, identifying one or more entities associated with the provided query or a computer device that is providing the query, word relationship extraction or entity relationship extraction, etc.), natural language understanding, query expansion, relevance recognition, personalization (e.g., associated with a user profile or associated with a location of the computing device providing the query), contextual analysis, etc.

The query vector generator 202 can also analyze search results for the search queries 202B. For example, query vector generator 202 can analyze the search results by generating a distribution of intent specificities for search results from a first query (e.g., a head or torso query). The distribution of intent specificities can be generated based on item listing embeddings 206 of item listings of search results for the first query. By way of example, the distribution of intent specificities for these search results can refer to the spread or arrangement of scores, data extracted from documents or links of the item listing, etc. In some embodiments, the intent specificity may indicate the relevance of the item listings or search result items in the context of the first query without consideration of user-desirability or without consideration of categorical taxonomy of the item listings.

The item listing embeddings 206 can be generated based on user interaction histories 206A. In some embodiments, the item listing embeddings can be generated based on a volume of a particular user interaction (e.g., purchases, a click-through rate, etc.). The item listing embeddings may be generated based on prior search queries and query type 206B. For example, the user interaction histories for a particular head query may be used for generating an item listing embedding for one or more item listings. In some embodiments, the item listing embeddings may be generated based on intent specificity scores 206C generated for tail queries using the intent specificity machine learning model(s). For example, particular item listings may have item listing embeddings generated using the intent specificity score for the tail query and based on being a historical search result for that tail query.

In some embodiments, the query vector generator 202 can analyze search results for the search queries 202B using one or more of a generative pre-trained transformer, a variational autoencoder, a recurrent neural network, a long short-term memory network, an attention-based model, a sequence-to-sequence model, a conditional generative model, a neural machine translation model, BERT, a zero-shot learning model, another model, or one or more combinations thereof. For example, a variational autoencoder can be used to improve an image of an item listing or extract relevant data from the image in the item listing. As another example, the recurrent neural network can be used to identify a sequence associated with identified features of an image within the item listing.

The query vector generator 202 can also analyze user interaction histories 202C for one or more search results of the first query. For example, particular search results having a threshold number of prior user interactions may be analyzed. In some embodiments, particular search results having a particular user device fingerprint, a particular IP address of a user device, or tracking via a particular cookie may be analyzed. In some embodiments, particular search results having particular item listing embeddings associated with user interactions can be analyzed. In some embodiments, particular search results having a particular number of previous clicks, cost-per-click data, click-through rate, impression shares (e.g., based on potential impressions), return on ad spend, ratings provided, views for a particular period of time, other types of historical user interactions, or one or more combinations thereof, can be analyzed.

In some embodiments, the query vector generator 202 can analyze user interaction histories 202C for identifying particular search results for particular query types (e.g., a head query type, a torso query type, a tail query type, another query type, etc.). That is, the user interaction histories 204 can be analyzed to determine a search query type 204A. In some embodiments, the user interaction histories 204 of search results for a first query type (e.g., a head query type) can be analyzed 204B, and the user interaction histories 204 of search results for a second query type (e.g., a torso query type) can be analyzed 204C. In some embodiments, the search results of the first query and the search results of the second query type can be analyzed based on a particular category, particular item feature, price range, particular seller, particular brand, etc., or one or more combinations thereof, described within the item description of the corresponding item listing. For example, the item listings can have particular tags indicating a particular user interaction history or a particular user interaction history volume and a tag for a particular price range.

The query vector generator 202 can generate the search query vector 202D based on one or more of the analyses of the search query 202A, one or more of the analyzed search results of the search query 202B, one or more of the analyses of the user interaction histories with the search results 202C, or one or more combinations thereof. For example, the query vector generator 202 can generate the search query vector 202D based on one or more aggregations of the item listing embeddings 206 for search results of a query. As another example, the query vector generator 202 can generate another query vector based on its corresponding item listing embeddings or one or more portions thereof. In some embodiments, the query vector generator 202 can generate a query vector by averaging corresponding item listing embeddings or one or more portions thereof.

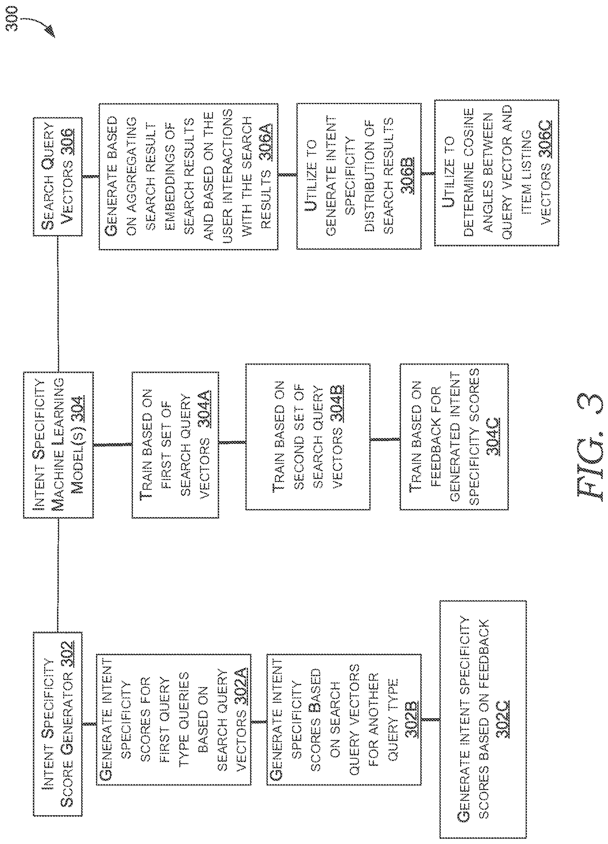

FIG. 3 illustrates example block diagram 300 for generating an intent specificity score via an intent specificity score generator 302. Example block diagram 300 includes example operations for intent specificity score generator 302 (e.g., operations 302A, 302B, and 302C), example operations associated with intent specificity machine learning model(s) 304 (e.g., operations 304A, 304B, and 304C), and example operations associated with search query vectors 306 (e.g., operations 306A, 306B, and 306C).

The intent specificity score generator 302 can generate intent specificity scores for a first query type (e.g., for tail queries) based on generated search query vectors 306 of the other types of queries (e.g., the head queries and torso queries) 302A. For example, based on generating the search query vectors 306 of the other query types (e.g., the head queries and torso queries) the intent specificity machine learning model(s) 304 could be trained in order to generate the intent specificity scores for a first query type (e.g., for tail queries). In some embodiments, the intent specificity score generator 302 can generate intent specificity scores for a browse node associated with a particular level of user interaction histories (e.g., the intent specificity score generator 302 can generate intent specificity scores for another query type 302B) based on a search query vector associated with other types of browse nodes used for training the intent specificity machine learning model(s) 304. Further, the intent specificity score generator 302 can generate intent specificity scores (e.g., for the tail queries) based on feedback 302C. By way of example, a user could provide feedback via a prompt with respect to the search results provided (based on the intent specificity score) for a tail query.

In embodiments, the intent specificity machine learning model(s) 304 can be trained based on generating a first set of search query vectors (e.g., generated for a plurality of head queries) 304A, based on generating a second set of search query vectors (e.g., generated for a plurality of torso queries) 304B, based on feedback provided in response to a generated intent specificity score 304C, or one or more combinations thereof. In some embodiments, a search query vector can be generated based on based on aggregating search result embeddings of search results for a first query of a first query type and based on the user interactions with those search results 306A. As another example, the intent specificity machine learning model(s) 304 can be trained based on aggregating search result embeddings of search results for a second query of the first query type and based on the user interactions with those search results. In yet another example, the intent specificity machine learning model(s) 304 can be trained based on aggregating search result embeddings of search results for a third query of a second query type and based on the user interactions with those search results.

In some embodiments, a search query vector can be utilized to generate an intent specificity distribution of search results for a first query of a first query type 306B. In some embodiments, another search query vector can be utilized to generate an intent specificity distribution of search results for a second query of the first query type and based on the user interactions with those search results. In some embodiments, another search query vector can be utilized to generate an intent specificity distribution of search results for a third query of a second query type and based on the user interactions with those search results. In some embodiments, a search query vector (e.g., for a head query or torso query) can be utilized for determining cosine angles between the search query and the item listing vectors of the search results for that query 306C. In some embodiments, that search query vector may be utilized for identifying a particular range of the cosine angles for determining a threshold for specificity scores.

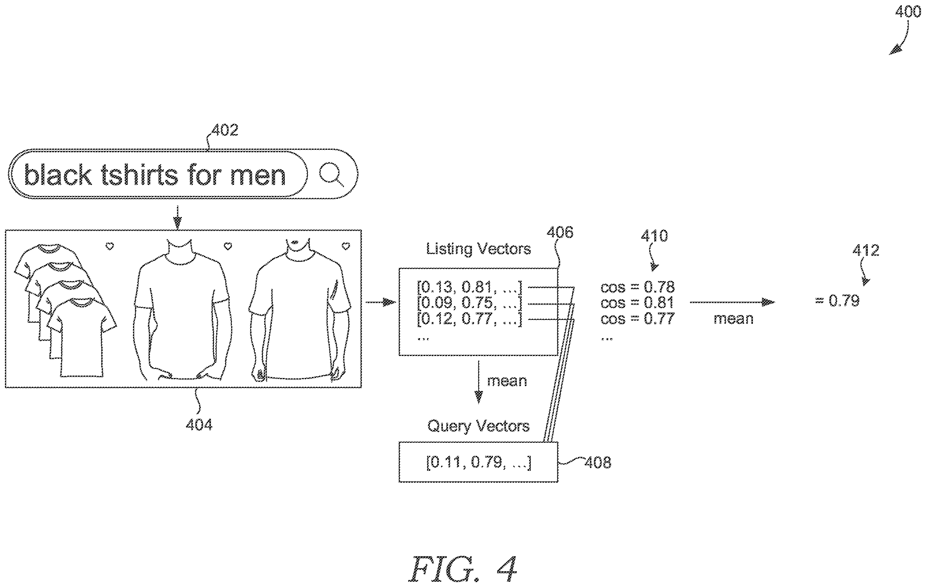

FIG. 4 illustrates an example flow diagram 400 for generating a query vector 408 and intent specificity 412 (e.g., for training the intent specificity machine learning model for determining intent specificity scores for another query type). At 402, a search bar can receive search queries (e.g., historically provided head and torso search queries) and produce search results at 404. Item listing embeddings can be extracted or generated at 406 for each of the search results at 404. A mean of the item listing embeddings can be determined to generate the query vector 408 for the search query received at 402. The cosine angles 410 between the query vector 408 and each of the item listing embeddings 406 are determined. Further, the mean of the cosine angles 410 is determined as the intent specificity 412 for the search query received at 402 (e.g., the head query or the torso query).

In some embodiments, lower cosine values that are further away from a "1" value may indicate that the intent specificity is less similar to the mean (e.g., indicating an item or item listing associated with the item listing embeddings 406 have a lower relevance in the context of the query received at 402 without consideration of user-desirability). In some embodiments, higher cosine values that are closer to a "1" value may indicate that the intent specificity is similar to the mean (e.g., indicating an item or item listing associated with the item listing embeddings 406 have a higher relevance in the context of the query received at 402 without consideration of user-desirability). In some embodiments, another statistical aggregation other than a mean value can be used for generating the query vector 408 or the intent specificity 412 (e.g., using a 90^{th} percentile).

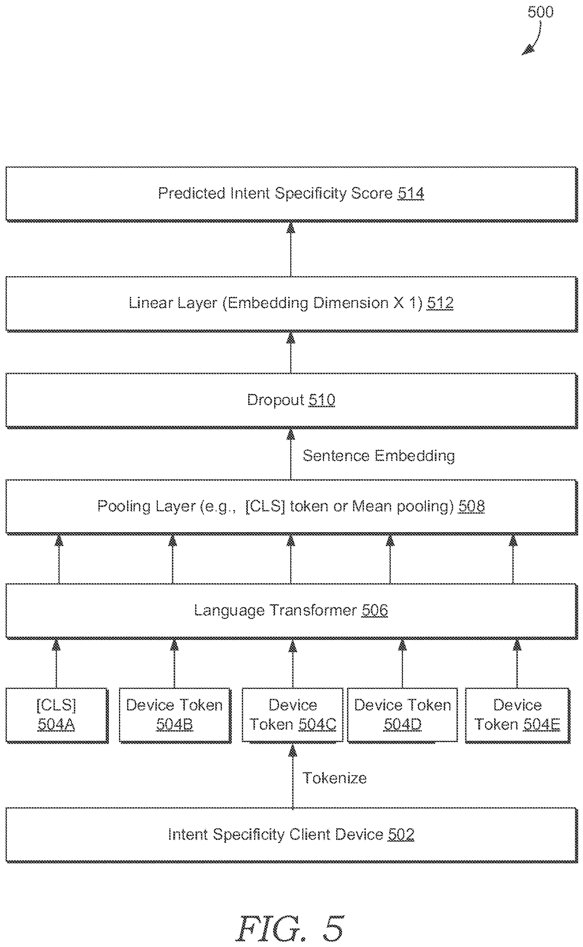

FIG. 5 illustrates an example flow diagram 500 for generating intent specificity score 514 based on utilizing an intent specificity machine learning model. For example, an intent specificity client device 502 can generate and provide one or more of a classification token (CLS) 504A and device tokens 504B, 504C, 504D, and 504E to one or more language transformers 506. In embodiments, the tokens 504A-504E can be generated for a tail type query. In some embodiments, the one or more language transformers 506 include Bidirectional Encoder Representations from Transformers (BERT). In embodiments, one or more of the device tokens 504B, 504C, 504D, and 504E are identifiers for a push notification or another type of user device interaction.

Based on providing the one or more of a classification token (CLS) 504A and device tokens 504B, 504C, 504D, and 504E to the one or more language transformers 506, pooling layer 508 can use one or more of the tokens 504A-504E (e.g., use a token passed through multiple layers of transformer encoders) to generate contextualized embeddings for the one or more tokens 504A-504E. For example, the pooling layer 508 can perform one or more of mean pooling (averaging output embeddings for all tokens in a sequence to provide a global context representation for further classification) or max pooling (using a maximum value for each dimension across output embeddings of all tokens).

After the pooling layer 508, a dropout 510 regularization technique for a neural network architecture can be performed. For example, dropout 510 may include randomly setting a fraction of input units to zero during training (e.g., the training being based on intent specificities for head and torso type queries) to prevent overfitting to enhance the intent specificity machine learning model. As another example, the dropout 510 technique can be used to minimize mean squared error loss. In yet another example, the training may include using a particular score generated for head and torso type queries as a regression target. As an example, the fraction of units that are dropped out via the dropout 510 technique can be a hyper-parameter that can be tuned. In implementations associated with inference or evaluation, the dropout may be turned off, and the full model (without dropout) may be used to make a prediction.

A linear layer 512 may be applied. For example, a linear transformation applied at linear layer 512 may be applied to an output embeddings from a BERT model. In embodiments, linear layer 512 may be used for a specific downstream task, such as text classification, named entity recognition, sentiment analysis, or another downstream task. As such, the intent specificity score 514 may be determined based on utilizing an intent specificity machine learning model.

### Example Flow Charts

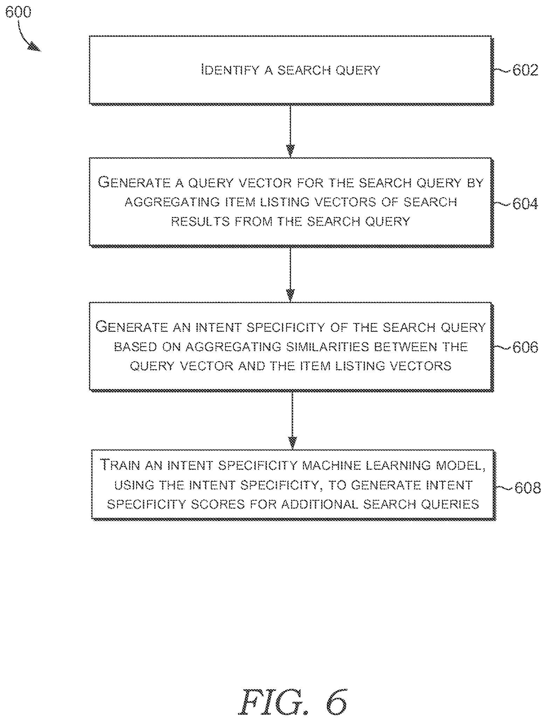

Flowchart 600 of FIG. 6 begins at step 602 with identifying a search query provided at a search engine. For example, the identified search query may be a first query of a first query type that is different from a second query type. For example, the first query type may correspond to a higher number of user interactions compared to the second query type. In some embodiments, the first query type is a head query type and the second query type is a tail query type. In some embodiments, a third query type is also identified, the third query type being different from the second query type and the first query type. For example, the third query type may correspond to a higher number of user interactions compared to the second query type and a lower number of user interactions compared to the first query type. In some embodiments, the third query type is a torso query type. In some embodiments, the first query type corresponds to search queries having less search terms than the search queries of the second query type.

At step 604, a query vector is generated for the search query by aggregating item listing vectors of search results from the search query. In some embodiments, the search results have user interaction histories by a user device that provided the search query to the search engine. In some embodiments, the query vector is generated based on utilizing one or more of the item listing embeddings 124 of FIG. 1, the user interaction histories 128 of FIG. 1, other data (e.g., other data stored within the database 120 of FIG. 1), or one or more combinations thereof. In some embodiments, the query vector is generated based on averaging the item listing embeddings 406 of FIG. 4.

At step 606, the similarities between the query vector and the item listing vectors can be determined. In some embodiments, the cosine angles 410 between the query vector 408 and each of the item listing embeddings 406 of FIG. 4 can be used. That is, the similarities between the query vector and the item listing vectors can be determined using cosine similarities between the query vector and the item listing vectors. In some embodiments, the similarities between the query vector and the item listing vectors are determined by using a Euclidean distance. These similarities can be used for determining an intent specificity score. By way of example, the mean of the cosine angles 410 of FIG. 4 may be used as the intent specificity.

At step 608, an intent specificity machine learning model is trained to generate intent specificity scores for other search queries (e.g., other types of search queries). In some embodiments, the intent specificity machine learning model is trained using an intent specificity for the first search query determined from the query vector. In some embodiments, the intent specificity machine learning model is trained based on a distribution of intent specificities from the search results of the first query based on user interactions with those search results. In some embodiments, the intent specificity machine learning model is trained using a plurality of intent specificities for a first set of queries of the first query type. In some embodiments, the intent specificity machine learning model is trained using a plurality of intent specificities for the first set of queries of the first query type (e.g., a set of head queries) and a second set of queries of the third query type (e.g., a set of torso queries).

In some embodiments, an intent specificity score is provided for a particular query of the second query type using a trained intent specificity machine learning model. For example, the intent specificity score may be provided based on receiving, at a search engine, the particular query of the second query type. As such, search results can be provided and generated for the particular query of the second query type based on the intent specificity score. For example, the intent specificity score can be used for query suggestions (e.g., for auto-competing queries, for suggesting a related search) associated with higher specificity, for refinement option suggestions, for managing query-dependent and query-independent factors to generate the search results, and for improved retrieval and ranking operations for generating the search results.

### Example Computing Device

Having described an overview of embodiments of the present technology, an example operating environment in which embodiments of the present technology may be implemented is described below in order to provide a general context for various aspects. Referring initially to FIG. 7, in particular, an example operating environment for implementing embodiments of the present technology is shown and designated generally as computing device 700. Computing device 700 is but one example of a suitable computing environment and is not intended to suggest any limitation as to the scope of use or functionality of the technology. Neither should computing device 700 be interpreted as having any dependency or requirement relating to any one or combination of components illustrated.

The technology of the present disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 7, computing device 700 includes bus 702 that directly or indirectly couples the following devices: memory 704, one or more processors 706, one or more presentation components 708, input/output ports 710, input/output components 712, and illustrative power supply 714. Bus 702 represents what may be one or more busses (such as an address bus, data bus, or combination thereof). Although the various blocks of FIG. 7 are shown with lines for the sake of clarity, in reality, delineating various components is not so clear, and metaphorically, the lines would more accurately be grey and fuzzy. For example, one may consider a presentation component, such as a display device, to be an I/O component. As another example, processors may also have memory. Such is the nature of the art, and it is again reiterated that the diagram of FIG. 7 is merely illustrates an example computing device that can be used in connection with one or more embodiments of the present technology. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, and removable and non-removable media. By way of example, and not limitation, computer-readable media may comprise computer storage media and communication media.

Computer storage media include volatile and nonvolatile, removable and non-removable media implemented in any method or technology for storage of information, such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

Memory 704 includes computer storage media in the form of volatile or nonvolatile memory. The memory 704 may be removable, non-removable, or a combination thereof. Example hardware devices include solid-state memory, hard drives, optical-disc drives, etc. Computing device 700 includes one or more processors that read data from various entities such as memory 704 or I/O components 712. Presentation component(s) 708 present data indications to a user or other device. Examples of presentation components include a display device, speaker, printing component, vibrating component, etc.

I/O ports 710 allow computing device 700 to be logically coupled to other devices including I/O components 712, some of which may be built in. Illustrative components include a microphone, joystick, game pad, satellite dish, scanner, printer, wireless device, and so forth.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the word "including" or "having" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media.

In addition, words such as "a" and "an," unless otherwise indicated to the contrary, include the plural as well as the singular. Thus, for example, the constraint of "a feature" is satisfied where one or more features are present.

Furthermore, the term "or" includes the conjunctive, the disjunctive, and both (*a* or *b* thus includes either *a* or *b,* as well as *a* and *b*).

For purposes of a detailed discussion above, embodiments of the present technology described with reference to a distributed computing environment; however, the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the described schematics, it is understood that the techniques described may be extended to other implementation contexts.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated the accompanying drawings is to be interpreted as illustrative and not in a limiting sense.

Some example aspects of the technology that may be practiced from the forgoing disclosure include the following:
Aspect 1: A computer-implemented method comprising: identifying a search query performed using a search engine; generating a query vector for the search query by aggregating item listing vectors of search results from the search query; determining similarities between the query vector and the item listing vectors; and generating an intent specificity of the search query based on aggregating the similarities between the query vector and the item listing vectors.
Aspect 2: Aspect 1, wherein the search results have user interaction histories by a user device that provided the search query to the search engine.
Aspect 3: Aspect 1 or 2, wherein aggregating the item listing vectors to generate the query vector includes determining means for the item listing vectors.
Aspect 4: Aspect 1, 2, or 3, wherein the similarities between the query vector and the item listing vectors are determined by using a Euclidean distance.
Aspect 5: Aspect 1, 2, 3, or 4, wherein the similarities between the query vector and the item listing vectors are determined using cosine similarities between the query vector and the item listing vectors.
Aspect 6: Aspect 1, 2, 3, 4, or 5, wherein aggregating the similarities between the query vector and the item listing vectors includes determining a mean of the cosine similarities.
Aspect 7: Aspect 1, 2, 3, 4, 5, or 6, further comprising: identifying a second search query performed using the search engine; generating at least one query vector for the second search query by aggregating item listing vectors of search results from the second search query; determining similarities between the at least one query vector for the second search query and the item listing vectors of the search results from the second search query; and generating a second intent specificity of the second search query based on aggregating the similarities between the at least one query vector for the second search query and the item listing vectors of the search results from the second search query.
Aspect 8: Aspect 1, 2, 3, 4, 5, 6, or 7, further comprising: training an intent specificity machine learning model using the intent specificity and the second intent specificity for generating intent specificity scores for additional search queries; providing a third query to the trained intent specificity machine learning model; and providing, using the trained intent specificity machine learning model, an intent specificity score for the third query.
Aspect 9: A computer system comprising: a processor; and a computer storage medium storing computer-useable instructions that, when used by the processor, causes the computer system to perform operations comprising: identifying a first set of queries having determined intent specificities; training an intent specificity machine learning model, using the intent specificities for each of the first set of queries, to generate intent specificity scores for additional search queries; providing a second query to the trained intent specificity machine learning model; and providing, using the trained intent specificity machine learning model, an intent specificity score for the second query.
Aspect 10: Aspect 9, wherein the intent specificities of the first set of queries are determined by: generating item listing vectors for each set of search results corresponding to each of the first set of queries; generating a query vector for at least one of the first set of queries using the item listing vectors of the search results for the at least one of the first set of queries; and determining a mean of cosine similarity between the query vector and the item listing vectors of the search results for the at least one of the first set of queries to determine the intent specificity for the at least one of the first set of queries.
Aspect 11: Aspect 9 or 10, wherein the first set of queries each have prior user interaction histories with search results for each of the first set of queries that is above a threshold.
Aspect 12: Aspect 9, 10, or 11, wherein the second query provided to the trained intent specificity machine learning model has prior user interaction histories with search results for the second query that is below a threshold.
Aspect 13: Aspect 9, 10, 11, or 12, further comprising: identifying a second set of queries having determined intent specificities, the first set of queries having a higher number of user interactions with search results compared to the second set of queries, the second set of queries having prior user interaction histories above the threshold; training the intent specificity machine learning model using the intent specificities for each of the second set of queries; and providing the intent specificity score for the second query based on training the intent specificity machine learning model using the intent specificities for each of the second set of queries.
Aspect 14: Aspect 9, 10, 11, 12 or 13, further comprising: determining that the intent specificity score for the second query is below an intent specificity score threshold; based on determining that the intent specificity score for the second query is below the intent specificity score threshold, determining that the second query is a query-independent factor; based on determining that the second query is the query-independent factor, ranking search results for the second query; and providing the search results for the second query based on the ranking.
Aspect 15: One or more non-transitory computer storage media storing computer-useable instructions that, when used by a user device, cause the user device to perform operations, the operations comprising: identifying a search query performed using a search engine; generating a query vector for the search query by aggregating item listing vectors of search results from the search query; determining similarities between the query vector and the item listing vectors; and generating an intent specificity of the search query based on aggregating the similarities between the query vector and the item listing vectors.
Aspect 16: Aspect 15, further comprising: identifying a second query performed using the search engine; aggregating search result embeddings of search results for the second query to generate a second query vector; determining cosine angles between the second query vector and each of the search result embeddings of the search results for the second query to generate an intent specificity for the second query.
Aspect 17: Aspect 15 or 16, further comprising: training an intent specificity machine learning model using the intent specificity for the search query and the intent specificity for the second query; providing a third query to the trained intent specificity machine learning model, the third query having lower user interaction histories for search results of the third query compared to the first query and the second query, the intent specificity machine learning model trained to generate intent specificity scores for queries having user interaction histories for search results that are lower than user interaction histories for the first query and the second query; and providing an intent specificity score for the third query using the trained intent specificity machine learning model.
Aspect 18: Aspect 15, 16, or 17, wherein the search result embeddings include item listing embeddings.
Aspect 19: Aspect 15, 16, 17, or 18, further comprising: determining that the intent specificity score for the third query is above an intent specificity score threshold; and based on determining that the intent specificity score for the third query is above the intent specificity score threshold, providing an indication that retrieval for search results using the third query is precise instead of an indication for recall.
Aspect 20: Aspect 15, 16, 17, 18, or 19, further comprising: determining that the intent specificity score for the third query is above an intent specificity score threshold; based on determining that the intent specificity score for the third query is above the intent specificity score threshold, determining that the third query is a query-dependent factor; based on determining that the third query is the query-dependent factor, ranking search results for the third query; and providing the search results for the third query based on the ranking.
Aspect 21: A computer-implemented method comprising: identifying queries of a first query type that is different from a second query type, the first query type corresponding to a higher number of user interactions compared to the second query type; generating a distribution of intent specificities for search results corresponding to the queries of the first query type based on the user interactions with the search results; training an intent specificity machine learning model, using the distribution of intent specificities, to generate intent specificity scores for search queries of the second query type; providing a search query of the second query type to the trained intent specificity machine learning model; and providing, using the trained intent specificity machine learning model, an intent specificity score for the search query.
Aspect 22: Aspect 21, wherein the first query type is a head query type and the second query type is a tail query type.
Aspect 23: Aspect 21 or 22, further comprising: determining that the intent specificity score for the search query is above an intent specificity score threshold; and based on determining that the intent specificity score for the search query is above the intent specificity score threshold, providing a set of search results for the search query based on indicating that retrieval for the set of search results using the search query is precise instead of an indication for recall.
Aspect 24: Aspect 21, 22, or 23, further comprising: determining that the intent specificity score for the search query is above an intent specificity score threshold; based on determining that the intent specificity score for the search query is above the intent specificity score threshold, determining that the search query is a query-dependent factor; based on determining that the search query is a query-dependent factor, ranking a set of search results for the search query; and providing the set of search results for the search query based on the ranking.
Aspect 25: Aspect 21, 22, 23, or 24, further comprising: identifying a plurality of queries of a third query type that is different from the second query type and the first query type, the third query type corresponding to a higher number of user interactions compared to the second query type and a lower number of user interactions compared to the first query type; generating a second distribution of intent specificities for search results of the plurality of queries of the third query type based on the user interactions with the search results of the plurality of queries of the third query type; training the intent specificity machine learning model using the second distribution of intent specificities to generate the intent specificity scores for the search queries of the second query type; and providing the intent specificity score for the search query based on training the intent specificity machine learning model using the second distribution of intent specificities.
Aspect 26: Aspect 21, 22, 23, 24, or 25, wherein the first query type is a head query type, the second query type is a tail query type, and the third query type is a torso query type.
Aspect 27: Aspect 21, 22, 23, 24, 25, or 26, wherein the intent specificity machine learning model includes Bidirectional Encoder Representations from Transformers (BERT).
Aspect 28: Aspect 21, 22, 23, 24, 25, 26, or 27, wherein the first query type corresponds to the queries having less search terms than the search queries of the second query type.
Aspect 29: a computer system comprising: a processor; and a computer storage medium storing computer-useable instructions that, when used by the processor, causes the computer system to perform operations comprising: identifying a first set of queries of a first query type that is different from a second query type, the first query type corresponding to a higher number of user interactions compared to the second query type; generating an intent specificity for each of the first set of queries based on associated search results for each of the first set of queries and based on the user interactions with the search results; training an intent specificity machine learning model using the intent specificity for each of the first set of queries to generate intent specificity scores for search queries of the second query type; providing a second query of the second query type to the trained intent specificity machine learning model; and providing, using the trained intent specificity machine learning model, an intent specificity score for the second query.
Aspect 30: Aspect 29, wherein the intent specificity machine learning model is trained based on: generating item listing vectors for each of the associated search results for each of the first set of queries; generating query vectors for each of the first set of queries using the item listing vectors; and determining a mean of cosine similarity between each of the query vectors and their corresponding item listing vectors to generate the intent specificity for each of the first set of queries.
Aspect 31: Aspect 29, or 30, further comprising: determining that the intent specificity score for the second query is below an intent specificity score threshold; and based on determining that the intent specificity score for the second query is below the intent specificity score threshold, providing a recall indication for retrieval of search results using the second query instead of an indication for precision.
Aspect 32: Aspect 29, 30, or 31, further comprising: identifying a set of queries of a third query type that is different from the second query type and the first query type, the third query type corresponding to a higher number of user interactions compared to the second query type and a lower number of user interactions compared to the first query type; generating a query vector for each of the set of queries of the third query type by aggregating search result embeddings of search results for each of the set of queries of the third query type; training the intent specificity machine learning model based on the query vector for each of the set of queries of the third query type; and providing the intent specificity score for the second query based on training the intent specificity machine learning model using the query vector for each of the set of queries of the third query type.
Aspect 33: Aspect 29, 30, 31, or 32, further comprising: determining that the intent specificity score for the second query is below an intent specificity score threshold; based on determining that the intent specificity score for the second query is below the intent specificity score threshold, determining that the second query is a query-independent factor; based on determining that the second query is a query-independent factor, ranking search results for the second query; and providing the search results for the second query based on the ranking.
Aspect 34: Aspect 29, 30, 31, 32, or 33, wherein the first set of queries includes at least a first query and a third query, and wherein the intent specificity machine learning model is trained based on: aggregating search result embeddings of search results for the first query to generate a first query vector; aggregating search result embeddings of search results for the third query to generate a second query vector; determining cosine angles between the first query vector and each of the search result embeddings of the search results for the first query to generate the intent specificity for the first query; and determining cosine angles between the second query vector and each of the search result embeddings of the search results for the third query to generate the intent specificity for the third query.
Aspect 35: one or more computer storage media storing computer-useable instructions that, when used by a computing device, cause the computing device to perform operations, the operations comprising: identifying a first set of queries, including at least a first query and a second query, of a first query type that is different from a second query type, the first query type corresponding to a higher number of user interactions compared to the second query type; generating a first query vector for the first query by aggregating search result embeddings of search results for the first query and based on the user interactions with the search results for the first query; generating a second query vector for the second query by aggregating search result embeddings of search results for the second query and based on the user interactions with the search results for the second query; training an intent specificity machine learning model, based on generating the first query vector and the second query vector, to generate intent specificity scores for search queries of the second query type; providing a third query of the second query type to the trained intent specificity machine learning model; and providing, using the trained intent specificity machine learning model, an intent specificity score for the third query.
Aspect 36: Aspect 35, wherein the search result embeddings of the search results for the first query include item listing embeddings.
Aspect 37: Aspect 35 or 36, further comprising: identifying a second set of queries, including at least a fourth query and a fifth query, of a third query type that is different from the second query type and the first query type, the third query type corresponding to a higher number of user interactions compared to the second query type and a lower number of user interactions compared to the first query type; generating a third query vector for the fourth query by aggregating search result embeddings of search results for the fourth query and based on the user interactions with the search results for the fourth query; generating a fourth query vector for the fifth query by aggregating search result embeddings of search results for the fifth query and based on the user interactions with the search results for the fifth query; training the intent specificity machine learning model based on generating the third query vector and the fourth query vector; and providing the intent specificity score for the third query using the intent specificity machine learning model trained based on generating the third query vector and the fourth query vector.
Aspect 38: Aspect 35, 36, or 37, wherein the intent specificity machine learning model is trained using intent specificities determined using the third query vector and the fourth query vector.
Aspect 39: Aspect 35, 36, 37, or 38, further comprising: determining that the intent specificity score for the third query is above an intent specificity score threshold; and based on determining that the intent specificity score for the third query is above the intent specificity score threshold, providing an indication that retrieval for search results using the third query is precise instead of an indication for recall.
Aspect 40: Aspect 35, 36, 37, 38, or 39, further comprising: determining that the intent specificity score for the third query is above an intent specificity score threshold; based on determining that the intent specificity score for the third query is above the intent specificity score threshold, determining that the third query is a query-dependent factor; based on determining that the third query is a query-dependent factor, ranking search results for the third query; and providing the search results for the third query based on the ranking.

## Claims

1. A computer-implemented method comprising:
identifying a search query performed using a search engine;
generating a query vector for the search query by aggregating item listing vectors of search results from the search query;
determining similarities between the query vector and the item listing vectors; and
generating an intent specificity of the search query based on aggregating the similarities between the query vector and the item listing vectors.

2. The computer-implemented method of claim 1, wherein the search results have user interaction histories by a user device that provided the search query to the search engine.

3. The computer-implemented method of claim 1 or 2, wherein aggregating the item listing vectors to generate the query vector includes determining means for the item listing vectors.

4. The computer-implemented method of any one of the preceding claims, wherein the similarities between the query vector and the item listing vectors are determined by using a Euclidean distance; and/or
wherein the similarities between the query vector and the item listing vectors are determined using cosine similarities between the query vector and the item listing vectors,
wherein, optionally, aggregating the similarities between the query vector and the item listing vectors includes determining a mean of the cosine similarities.

5. The computer-implemented method of any one of the preceding claims, further comprising:
identifying a second search query performed using the search engine;
generating at least one query vector for the second search query by aggregating item listing vectors of search results from the second search query;
determining similarities between the at least one query vector for the second search query and the item listing vectors of the search results from the second search query; and
generating a second intent specificity of the second search query based on aggregating the similarities between the at least one query vector for the second search query and the item listing vectors of the search results from the second search query.

6. The computer-implemented method of any one of the preceding claims, further comprising:
training an intent specificity machine learning model using the intent specificity and the second intent specificity for generating intent specificity scores for additional search queries;
providing a third query to the trained intent specificity machine learning model; and
providing, using the trained intent specificity machine learning model, an intent specificity score for the third query.

7. A computer system comprising:
a processor; and
a computer storage medium storing computer-useable instructions that, when used by the processor, causes the computer system to perform operations comprising:
identifying a first set of queries having determined intent specificities;
training an intent specificity machine learning model, using the intent specificities for each of the first set of queries, to generate intent specificity scores for additional search queries;
providing a second query to the trained intent specificity machine learning model; and
providing, using the trained intent specificity machine learning model, an intent specificity score for the second query.

8. The computer system of claim 7, wherein the intent specificities of the first set of queries are determined by:
generating item listing vectors for each set of search results corresponding to each of the first set of queries;
generating a query vector for at least one of the first set of queries using the item listing vectors of the search results for the at least one of the first set of queries; and
determining a mean of cosine similarity between the query vector and the item listing vectors of the search results for the at least one of the first set of queries to determine the intent specificity for the at least one of the first set of queries.

9. The computer system of claims 7 or 8, wherein the first set of queries each have prior user interaction histories with search results for each of the first set of queries that is above a threshold,
wherein, optionally, the second query provided to the trained intent specificity machine learning model has prior user interaction histories with search results for the second query that is below a threshold, and
wherein the computer system optionally further comprising:
identifying a second set of queries having determined intent specificities, the first set of queries having a higher number of user interactions with search results compared to the second set of queries, the second set of queries having prior user interaction histories above the threshold;
training the intent specificity machine learning model using the intent specificities for each of the second set of queries; and
providing the intent specificity score for the second query based on training the intent specificity machine learning model using the intent specificities for each of the second set of queries.

10. The computer system of any one of claims 7 to 9, further comprising:
determining that the intent specificity score for the second query is below an intent specificity score threshold;
based on determining that the intent specificity score for the second query is below the intent specificity score threshold, determining that the second query is a query-independent factor;
based on determining that the second query is the query-independent factor, ranking search results for the second query; and
providing the search results for the second query based on the ranking.

11. One or more transitory or non-transitory computer storage media storing computer-useable instructions that, when used by a user device, cause the user device to perform operations, the operations comprising:
identifying a search query performed using a search engine;
generating a query vector for the search query by aggregating item listing vectors of search results from the search query;
determining similarities between the query vector and the item listing vectors; and
generating an intent specificity of the search query based on aggregating the similarities between the query vector and the item listing vectors.

12. The one or more transitory or non-transitory computer storage media of claim 11, further comprising:
identifying a second query performed using the search engine;
aggregating search result embeddings of search results for the second query to generate a second query vector;
determining cosine angles between the second query vector and each of the search result embeddings of the search results for the second query to generate an intent specificity for the second query.

13. The one or more transitory or non-transitory computer storage media of claim 12, further comprising:
training an intent specificity machine learning model using the intent specificity for the search query and the intent specificity for the second query;
providing a third query to the trained intent specificity machine learning model, the third query having lower user interaction histories for search results of the third query compared to the first query and the second query, the intent specificity machine learning model trained to generate intent specificity scores for queries having user interaction histories for search results that are lower than user interaction histories for the first query and the second query; and
providing an intent specificity score for the third query using the trained intent specificity machine learning model,
wherein, optionally, the search result embeddings include item listing embeddings.

14. The one or more transitory or non-transitory computer storage media of claim 13, further comprising:
determining that the intent specificity score for the third query is above an intent specificity score threshold; and
based on determining that the intent specificity score for the third query is above the intent specificity score threshold, providing an indication that retrieval for search results using the third query is precise instead of an indication for recall.

15. The one or more transitory or non-transitory computer storage media of claim 13 or 14, further comprising:
determining that the intent specificity score for the third query is above an intent specificity score threshold;
based on determining that the intent specificity score for the third query is above the intent specificity score threshold, determining that the third query is a query-dependent factor;
based on determining that the third query is the query-dependent factor, ranking search results for the third query; and
providing the search results for the third query based on the ranking.
